(19) Europäisches Patentamt
European Patent Office
Office européen des brevets

(11) EP 2 824 750 B1

(12) **EUROPEAN PATENT SPECIFICATION**

(45) Date of publication and mention of the grant of the patent:
**30.01.2019 Bulletin 2019/05**

(51) Int Cl.:
***H01M 10/052*** *(2010.01)* ***H01M 10/0567*** *(2010.01)*
***H01M 4/13*** *(2010.01)*

(21) Application number: **14162751.3**

(22) Date of filing: **31.03.2014**

(54) **Silicon-containing compound used in electrolytes for lithium secondary batteries**

Siliziumhaltige Verbindung in Elektrolyten für Lithiumsekundärbatterien

Composé contenant du silicium comme électrolyte pour batterie secondaire au lithium

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2013 US 201361843847 P**

(43) Date of publication of application:
**14.01.2015 Bulletin 2015/03**

(73) Proprietor: **Samsung SDI Co., Ltd.**
**Yongin-si, Gyeonggi-do (KR)**

(72) Inventors:
- **Egorov, Vladimir**
  **Gyeonggi-do (KR)**
- **Shin, Woo-Cheol**
  **Gyeonggi-do (KR)**
- **Kim, Soo-Jin**
  **Gyeonggi-do (KR)**
- **Woo, Myung-Heui**
  **Gyeonggi-do (KR)**
- **Park, Hye-Jin**
  **Gyeonggi-do (KR)**
- **Cha, Si-Young**
  **Gyeonggi-do (KR)**

(74) Representative: **Mounteney, Simon James**
**Marks & Clerk LLP**
**90 Long Acre**
**London**
**WC2E 9RA (GB)**

(56) References cited:
**US-A1- 2006 269 846** **US-A1- 2013 011 728**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 824 750 B1

## Description

[Technical Field]

One or more embodiments of the present invention relate to a silicon-containing compound, an electrolyte for lithium secondary battery, a lithium secondary battery including the electrolyte, and the use of the silicon-containing compound in an electrolyte.

[Prior Art]

Lithium secondary batteries are rechargeable at high rates and have energy densities that are about three times higher than conventional lead storage batteries, nickel-cadmium (Ni-Cd) batteries, nickel-hydrogen batteries, and nickel-zinc batteries, and thus there has been increasing research and development into lithium secondary batteries.

In general, a lithium secondary battery includes a cathode, an anode, a separator disposed between the cathode and the anode, and an electrolyte. The electrolyte serves to transport lithium ions between the cathode and the anode.

These lithium ions may maintain charge neutrality together with electrons flown into the electrodes, and serve as media for storing electric energy in the electrodes. Accordingly, the amount of lithium ions intercalated into the electrode is important. Thus, to achieve high battery performance, an electrolyte with high ionic conductivity, high electrochemical stability, and high thermal stability is required.

With a recent increasing demand for high-energy density lithium secondary batteries, for example, for use in electric vehicles, high-voltage electrode active materials have been used. With the use of a low-potential anode active material and a high-potential cathode active material, the electrolyte has become to have a more narrow window than that of the anode and cathode active materials, and thus to be more vulnerable to decompose at the surface of the cathode/anode. Lithium secondary batteries for electric vehicles and power storage systems are more likely to be exposed to high-temperature environments, and undergo an instant temperature rise from instant charging and discharging. Such high-temperature environments may reduce the lifetime of batteries and the amount of energy stored therein.

Therefore, there is a demand for the development of electrolyte composition for lithium secondary batteries suitable for use in high-temperature environments. US 2006/269846 A1 relates to the use of a nitrogen silylated compound as additive in a non-aqueous electrolytic solution.

US 2013/011728 A1 relates to a non-aqueous electrolyte which comprises a monofluorophosphate and/or a difluorophosphate.

[Disclosure of the Invention]

[Technical Goal of the Invention]

The present invention provides the use of silicon compounds in electrolytes as claimed in claim 1, silicon-containing compounds as claimed in claim 2, an electrolyte as claimed in claims 3 to 6 and a battery as claimed in claims 7 to 9.

One or more embodiments of the present invention include a silicon-containing compound that improves (high-temperature) lifetime characteristics and high-temperature stability of lithium secondary batteries.

One or more embodiments of the present invention include an electrolyte for lithium secondary batteries that improves (high-temperature) lifetime characteristics and high-temperature stability of lithium secondary batteries.

One or more embodiments of the present invention include a lithium secondary battery including the electrolyte.

[Means for Achieving Technical Goal]

According to an aspect of the present disclosure, there is provided a use of one or more silicon-containing compounds represented by Formula 1 below in an electrolyte:

<Formula 1>

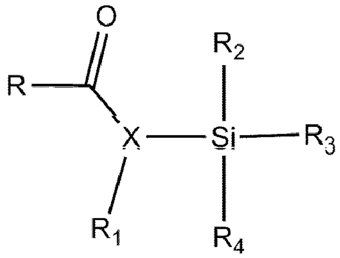

wherein, in Formula 1,

X is nitrogen (N), phosphorous (P), or boron (B);
R and $R_1$ are each independently a hydrogen atom, a hydroxy group, a cyano group, -OR (where R is a C1-C6 alkyl group or a C6-C20 aryl group), $-C(=O)R_a$,$-C(=O)OR_a$, $-OC(=O)R_a$, $-OC(=O)(OR_a)$, $-OC(=O)(OR_a)$, $-NR_bR_c$, a substituted or unsubstituted C1-C10 alkyl group, a substituted or unsubstituted C1-C6 alkoxy group, a substituted or unsubstituted C2-C6 alkenyl group, a substituted or unsubstituted C2-C6 alkynyl group, a substituted or unsubstituted C3-C12 cycloalkyl group, a substituted or unsubstituted C6-C20 aryl group, a substituted or unsubstituted C6-C20 aryloxy group, a substituted or unsubstituted C6-C20 heteroaryl group,;
$R_2$, $R_3$, and $R_4$ are each independently a cyano group, -OR (where R is a C1-C12 alkyl group, or a C6-C12 aryl group), $-C(=O)R_a$, $-C(=O)OR_a$, $-OC(=O)R_a$,$-OC(=O)(OR_a)$, $-OC(=O)(OR_a)$, $-NR_bR_c$, a substituted or unsubstituted C1-C12 alkyl group, a substituted or unsubstituted C1-C12 alkoxy group, a substituted or unsubstituted C2-C12 alkenyl group, a substituted or unsubstituted C2-C12 alkynyl group, a substituted or unsubstituted C3-C20 cycloalkyl group, a substituted or unsubstituted C6-C12 aryl group, a substituted or unsubstituted C6-C12 aryloxy group, a substituted or unsubstituted C6-C12 heteroaryl group, or a combination thereof;
$R_a$ is a hydrogen atom, a halogen atom, a C1-C10 alkyl group unsubstituted or substituted with a halogen atom, a C6-C12 aryl group unsubstituted or substituted with a halogen atom, or a C1-C12 heteroaryl group unsubstituted or substituted with a halogen atom; and
$R_b$ and $R_c$ are each independently a hydrogen atom, a halogen atom, a C1-C10 alkyl group unsubstituted or substituted with a halogen atom, a C2-C10 alkenyl group unsubstituted or substituted with a halogen atom, , a C3-C12 cycloalkyl group unsubstituted or substituted with a halogen atom, a C6-C12 aryl group unsubstituted or substituted with a halogen atom, a C6-C12 heteroaryl group unsubstituted or substituted with a halogen atom, or $-Si(R_d)_3$ (where $R_d$ is a C1-C10 alkyl group).

According to another aspect, provided is an electrolyte comprising the above-mentioned silicon-containing compound, preferably an electrolyte for a lithium secondary battery includes: a lithium salt; a non-aqueous organic solvent; and an electrolyte including the above-described silicon-containing compound.

According to another aspect, a lithium secondary battery comprising the above-mentioned silicon-containing compound, preferably a lithium battery that includes: a cathode including a cathode active material that allows intercalation and deintercalation of lithium; an anode including an anode active material that allows intercalation and deintercalation of lithium; and an electrolyte disposed between the cathode and the anode, wherein the electrolyte includes a lithium salt, a non-aqueous organic solvent, and the silicon-containing compound of Formula 1 above.

[Effect of the Invention]

As described above, according to the one or more embodiments of the present invention, a silicon-containing compound of Formula 1 as defined in claim 1 used as an additive of an electrolyte for a lithium secondary battery may form a solid electrolyte interface (SEI) as a thin film on a surface of the anode, thereby reducing an amount of irreversible lithium ions resulting from a side reaction between the anode and the electrolyte and preventing generation of gas by decomposition of the electrolyte. Therefore, the lithium secondary battery with this thin film may have improved (high-temperature) lifetime characteristics and high-temperature stability.

[Brief Description of the Drawings]

FIG. 1 is a schematic cross-sectional view illustrating a thin film formed on a surface of an anode of a lithium

secondary battery, according to an exemplary embodiment of the present invention;

FIG. 2 is an exploded perspective view of a lithium secondary battery according to an embodiment of the present invention;

FIG. 3 is a graph of capacity retention rate with respect to number of cycles in lithium secondary batteries of Examples 8, 12 and 14 and Comparative Examples 7 and 8 at room temperature (25°C);

FIG. 4 is a graph of capacity retention rate with respect to number of cycles in lithium secondary batteries of Examples 8, 13 and 14 and Comparative Example 7 at high temperature (45°C);

FIG. 5 is a graph illustrating capacity reduction in lithium secondary batteries of Examples 8 and 14 and Comparative Example 1 when left at high temperature (60 °C);

FIG. 6 is a graph illustrating results of cyclic voltammetry analysis on electrolytes of Example 2 and Comparative Example 1;

FIG. 7 is a graph illustrating results of linear sweep voltammetry (LSV) analysis on the electrolytes of Example 2 and Comparative Example 1; and

FIG. 8 is a graph illustrating results of impedance measurement on lithium secondary batteries of Example 9 and Comparative Example 5.

[Description of Embodiment]

The present disclosure will now be described more fully with reference to the accompanying drawings, in which embodiments of a silicon-containing compound, an electrolyte for lithium secondary batteries that includes the silicon-containing compound, a lithium secondary battery including the electrolyte, and a method of preparing the silicon-containing compound are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

According to an embodiment, there is provided a silicon-containing compound for use in an electrolyte represented by Formula 1 below:

<Formula 1>

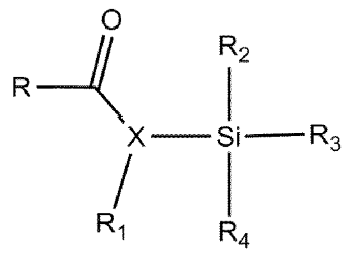

wherein, in Formula 1,

X is nitrogen (N), phosphorous (P), or boron (B);

R and $R_1$ are each independently a hydrogen atom, a hydroxy group, a cyano group, -OR (where R is a C1-C6 alkyl group or a C6-C20 aryl group), $-C(=O)R_a$,$-C(=O)OR_a$, $-OC(=O)R_a$, $-OC(=O)(OR_a)$, $-OC(=O)(OR_a)$, $-NR_bR_c$, a substituted or unsubstituted C1-C10 alkyl group, preferably a C1-C6 alkyl group, a substituted or unsubstituted C1-C6 alkoxy group, a substituted or unsubstituted C2-C6 alkenyl group, a substituted or unsubstituted C2-C6 alkynyl group, a substituted or unsubstituted C3-C12 cycloalkyl group, a substituted or unsubstituted C6-C20 aryl group, a substituted or unsubstituted C6-C20 aryloxy group, a substituted or unsubstituted C6-C20 heteroaryl group, or a combination thereof;

$R_2$, $R_3$, and $R_4$ are each independently a cyano group, -OR (where R is a C1-C12 alkyl group, or a C6-C12 aryl group), $-C(=O)R_a$, $-C(=O)OR_a$, $-OC(=O)R_a$,$-OC(=O)(OR_a)$, $-OC(=O)(OR_a)$, $-NR_bR_c$, a substituted or unsubstituted C1-C12 alkyl group, a substituted or unsubstituted C1-C12 alkoxy group, a substituted or unsubstituted C2-C12 alkenyl group, a substituted or unsubstituted C2-C12 alkynyl group, a substituted or unsubstituted C1-C10 alkylene cyano group, a substituted or unsubstituted C2-C12 alkylene oxide group, a substituted or unsubstituted C3-C12 cycloalkyl group, a substituted or unsubstituted C6-C12 aryl group, a substituted or unsubstituted C6-C12 aryloxy group, a substituted or unsubstituted C6-C12 heteroaryl group, or a combination thereof;

$R_a$ is a hydrogen atom, a halogen atom, a C1-C10 alkyl group unsubstituted or substituted with a halogen atom, a C6-C12 aryl group unsubstituted or substituted with a halogen atom, or a C1-C12 heteroaryl group, preferably a C6-C12 heteroaryl group unsubstituted or substituted with a halogen atom; and

$R_b$ and $R_c$ are each independently a hydrogen atom, a halogen atom, a C1-C10 alkyl group unsubstituted or substituted with a halogen atom, a C2-C10 alkenyl group unsubstituted or substituted with a halogen atom, a C3-C12 cycloalkyl group unsubstituted or substituted with a halogen atom, a C6-C12 aryl group unsubstituted or substituted with a halogen atom, a C1-C12 heteroaryl group, preferably a C6-C12 heteroaryl group, unsubstituted or substituted with a halogen atom, or $-Si(R_d)_3$ (where $R_d$ is a C1-C10 alkyl group).

In Formula 1 above, "substituted" in the term "a substituted or unsubstituted" means substitution with a halogen atom, a C1-C10 alkyl group substituted with a halogen atom (for example, $CCF_3$, $CHCF_2$, $CH_2F$, $CCl_3$, and the like), a hydroxy group, a nitro group, a cyano group, an amino group, an amidino group, a hydrazine, a hydrazone, a carboxyl group or a salt thereof, a sulfonic acid group or a salt thereof, a phosphoric acid group or a salt thereof, a C1-C10 alkyl group, a C2-C10 alkenyl group, a C2-C10 alkynyl group, or a C1-C10 heteroalkyl group (for example, thiophen-2-yl, thiophen-3-yl, pyrrol-1-yl, pyrrol-2-yl, pyrrol-3-yl, and the like).

For example, in the silicon-containing compound represented by Formula 1, X may be nitrogen (N); R and $R_1$ may be each independently a C1-C6 alkyl group unsubstituted or substituted with a halogen atom, or a combination thereof; and $R_2$, $R_3$, and $R_4$ may be each independently a C1-C12 alkyl group unsubstituted or substituted with a halogen atom, a C2-C12 alkenyl group unsubstituted or substituted with a halogen atom, or a combination thereof.

In a preferred embodiment, at least two of $R_2$, $R_3$ and $R_4$ are independently a C1-C12 alkyl, preferably each a C2 to C5 alkyl and the remaining substituent, if present, a C2-C12 alkenyl group, preferably a C2 to C5 alkenyl group.

In a preferred embodiment R and $R_1$ may be each independently a C1-C4 alkyl group unsubstituted or substituted with a fluorine atom. In a preferred embodiment, $R_1$ is not substituted and R is substituted with a fluorine atom, preferably R is entirely substituted with a fluorine atom, i.e. all hydrogen atoms are replaced by fluorine atoms.

The silicon-containing compound may include at least one of Compounds 1 to 4 below:

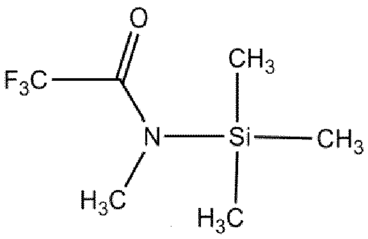

1

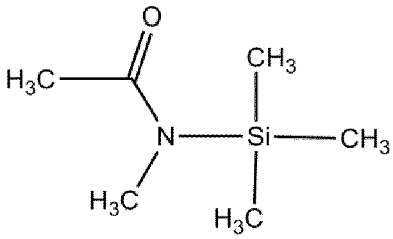

2

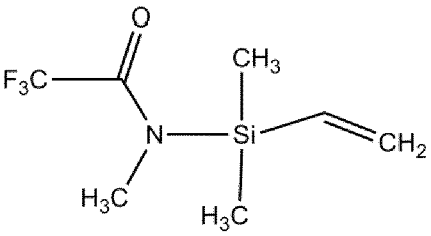

3

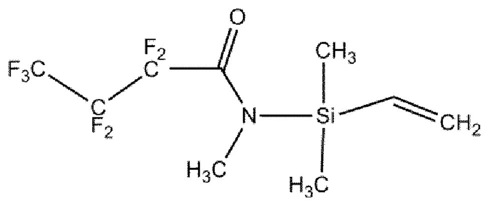

4

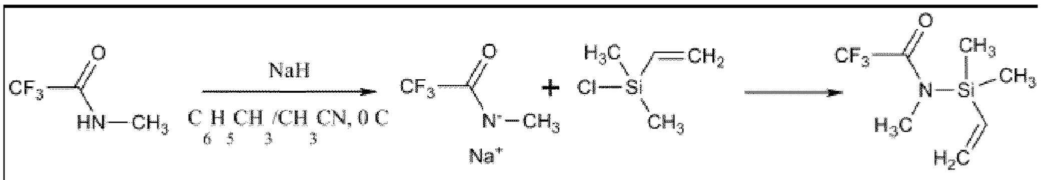


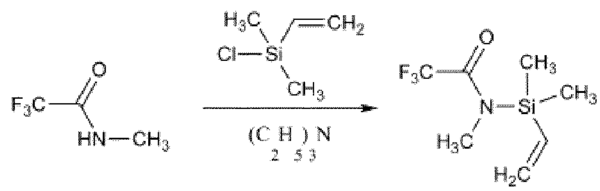


Compound 3 may be prepared by the two reaction schemes set out above. Compound 4 may also be prepared by these schemes if in the starting material of Compound 3 a replacement of -CF3 with -CF2CF2CF3.

The present disclosure also provides compounds of formula 1 where R is a C1-C6 alkyl group substituted with one or more halogen atoms; and $R_2$ is an unsubstituted C2-C12 alkenyl group or a C2-C12 alkenyl group substituted with one or more halogen atoms; and preferably $R_3$ and $R_4$ in these compounds are independently a C1-C12 alkyl, preferably each a C2 to C5 alkyl. In a preferred embodiment $R_2$ is a unsubstituted C2 to C5 alkenyl group, preferably C2 to C4.

In a preferred embodiment, $R_1$ is not substituted and/or R is substituted with a fluorine atom, preferably R is entirely substituted with fluorine atoms, i.e. all hydrogen atoms are replaced by fluorine atoms.

In a preferred embodiment of the present invention is provided compounds of Formulae 3 and 4.

In a preferred embodiment provided is a process for manufacturing the compounds of the present invention. The process comprises the steps of reacting $R(O)XR_1H$ with a base and then with $HalSiR_2R_3R_4$. Hal may preferably be Cl, Br or I, preferably Cl. In a preferred embodiment the base may be NaH or $(C_2H_5)N$. In a preferred embodiment the reaction may take place in an organic solvent, preferably acetonitrile or toluene.

The silicon-containing compound may include nitrogen (N), phosphorous (P), or boron (B) with noncovalent electron pair(s). For example, the silicon-containing compound may include nitrogen (N) with noncovalent electron pair(s). The silicon-containing compound may serve as an electron donor, and react with lithium salt $LiPF_6$ to form a lewis acid ($LiPF_6$)-lewis base compound (Compound 6), wherein a side reaction of the lithium salt $LiPF_6$ with a carbonate-based organic solvent may be effectively suppressed not to form a byproduct from lithium salt decomposition, such as lithium fluoride (HF) and water ($H_2O$).

Accordingly, when the silicon-containing compound is added into an electrolyte, a solid electrolyte interphase (SEI) with low resistance may be formed due to improvement in stability and conductivity, and consequently improves (high-temperature) lifetime characteristics and high-temperature stability of a lithium secondary battery.

When the silicon-containing compound includes a substituent, for example a C1-C6 alkyl group unsubstituted or substituted with a halogen atom, such a substituent may serve as an electron-withdrawing group, so that carbons adjacent to these functional groups may be apt to be $\delta^+$ and easily react with the lithium salt $LiPF_6$ in the electrolyte. When the silicon-containing compound includes a C2-C12 alkenyl group unsubstituted or substituted with a halogen atom, this substitute may take electrons from anions of a non-aqueous organic solvent dissociated from melting of the lithium salt $LiPF_6$ in the electrolyte to form a single bond, which may consequently facilitate formation of a solid electrolyte interphase (SEI) layer on a surface of an anode.

This mechanism may be represented by Reaction Scheme 1 below.

< Reaction Scheme 1 >

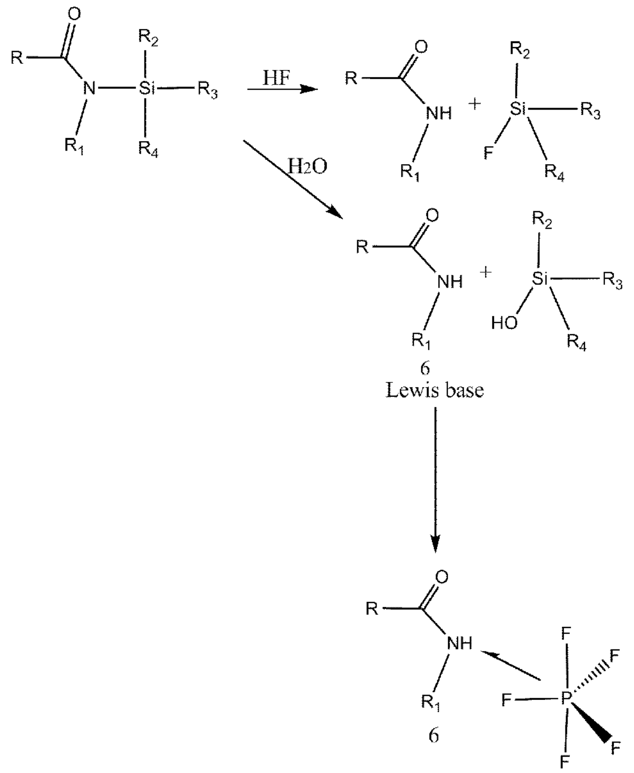


According to another embodiment of the present invention, an electrolyte for a lithium secondary battery includes a lithium salt, a non-aqueous organic solvent, and the silicon-containing compound of Formula 1 above.

An amount of the silicon-containing compound may be from about 0.01wt% to about 25wt%, and in some embodiments, from about 0.01wt% to about 15wt%, and in some other embodiments, from about 0.01wt% to about 10wt%, preferably 0.1wt% to 5.0wt%, preferably 0.25wt% to 4.0wt%, preferably 0.50wt % to about 3.0wt%., each based on a total weight of the electrolyte, i.e. organic solvent mixture, the lithium salt, the silicon compound and the $LiPO_2F_2$ (if present). When the amount of the silicon-containing compound is within these ranges, electrochemical stability and thermal stability of the electrolyte may be improved without deteriorating battery performance.

The electrolyte for a lithium secondary battery may further include lithium difluorophosphate ($LiPO_2F_2$). When lithium difluorophosphate is further added into the electrolyte, a SEI layer may be more stably formed on a surface of an anode to reduce a resistance, and may consequently improve (high-temperature) lifetime characteristics and high-temperature stability of a lithium secondary battery.

An amount of the lithium difluorophosphate ($LiPO_2F_2$) may be from about 0.01wt% to about 5wt%, and in some embodiments, from about 0preferablybout 3wt%, preferably from amount 0.25wt% to about 2.5wt%, preferably from about 0.5wt% to about 2.0wt%, each based on a total weight of the electrolyte, i.e. organic solvent mixture, the lithium salt, the silicon compound and the $LiPO_2F_2$. When the amount of the lithium difluorophosphate ($LiPO_2F_2$) is within these ranges, a lithium secondary battery may have a reduced resistance during high-temperature storage, and thus have improved high-temperature stability.

In a preferred embodiment of the present invention, the silicon-containing compound may be from about 0.1wt% to 5.0wt%, preferably 0.25wt% to 4.0wt%, and lithium difluorophosphate ($LiPO_2F_2$) may be from about 0.25wt% to about 2.5wt%, preferably from about 0.5wt% to about 2.0wt%.

The lithium salt may include $LiPF_6$, $LiBF_4$, $LiSbF_6$, $LiAsF_6$, $LiCF_3SO_3$, $Li(CF_3SO_2)_3C$, $Li(CF_3SO_2)_2N$, $LiC_4F_9SO_3$, $LiClO_4$, $LiAlO_4$, $LiAlCl_4$, $LiBPh_4$, $LiN(C_xF_{2x+1}SO_2)(C_xF_{2y+1}SO_2)$ (where x and y are natural numbers), LiCl, LiI, LIBOB (lithium bisoxalate borate), or a combination thereof. The lithium salt is dissolved in a non-aqueous organic solvent and serves as a source of lithium ions in a lithium secondary battery, thereby enabling operation of the lithium secondary battery.

A concentration of the lithium salt may be within a common range applied in the art. The concentration of the lithium salt is not specifically limited, and in some embodiments, may be in a range of about 0.1M to about 2.0M in the electrolyte. When the concentration of the lithium salt is within this range, a concentration of the electrolyte may be appropriately maintained to have improved performance, and a viscosity of the electrolyte may be appropriately maintained to improve mobility of lithium ions.

The non-aqueous organic solvent may be a carbonate-based solvent, an ester-based solvent, an ether-based solvent, a ketone-based solvent, an alcohol-based solvent, an aprotic solvent, or a combination thereof. For example, the non-aqueous organic solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoro ethylene carbonate (FEC), methyl acetate, ethyl acetate, n-propyl acetate, dimethylacetate, methylpropionate (MP), ethylpropionate (EP), ethylbutyrate(EB), y-butyrolactone, decanolide, y-valero lactone, mevalonolactone, caprolactone, dibutyl ether, tetraglyme, diglyme, dimethoxyethane, 2-methyltetrahydrofuran, tetrahydrofuran (THF), cyclohexanone, ethylalcohol, isopropylalcohol, $R_e$-CN ($R_e$ is a C2-C20 linear, branched, or cyclic hydrocarbon group, a double bond, an aromatic ring, or an ether bond), dimethylsulfoxide (DMSO), dimethylformamide, dimethylacetamide (DMAC), 1,3-dioxolane, sulfolane, or a combination thereof.

For example, the non-aqueous organic solvent may be a carbonate-based solvent. The carbonate-based solvent may include a combination of cyclic carbonate and linear carbonate, in consideration of dielectric constant and viscosity of the non-aqueous organic solvent. For example, a combination of cyclic carbonate and chain carbonate in a volume ratio of about 1:1 to about 1:9 may be used.

The non-aqueous organic solvent may further include an aromatic hydrocarbon-based organic solvent in the carbonate-based solvent. The carbonate-based solvent and the aromatic hydrocarbon-based organic solvent may be mixed, for example, in a volume ratio of about 1:1 to about 30:1.

An example of the aromatic hydrocarbon-based organic solvent is an aromatic hydrocarbon-based compound represented by the following formula:

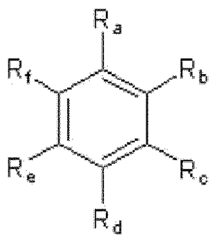

In the formula above, $R_a$ to $R_f$ may be each independently a hydrogen atom, a halogen atom, a C1-C10 alkyl group, a haloalkyl group, or a combination thereof.

Examples of the aromatic hydrocarbon-based organic solvent include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or combinations thereof.

According to another embodiment of the present invention, a lithium secondary battery includes: a cathode including a cathode active material that allows intercalation and deintercalation of lithium; an anode including an anode active material that allows intercalation and deintercalation of lithium; and an electrolyte disposed between the cathode and the anode, wherein the electrolyte includes a lithium salt, a non-aqueous organic solvent, and the silicon-containing compound of Formula 1 above.

The detailed descriptions of the lithium salt, the non-aqueous organic solvent and the silicon-containing compound of Formula 1 used in the electrolyte may be referred to as those of the lithium salt, the non-aqueous organic solvent and the silicon-containing compound of Formula 1 in the lithium secondary battery.

The anode may include a thin film on a surface thereof. The thin film may be a layer partially or entirely derived from the silicon-containing compound of Formula 1 in the electrolyte, not a layer formed by additional coating of a surface of the anode.

Since the silicon-containing compound in the electrolyte of the lithium secondary battery forms the thin film on the surface of the anode, the amount of the silicon-containing compound in the electrolyte may be reduced during operation of the lithium secondary battery.

For example, the amount of the silicon-containing compound in the electrolyte after operation of the lithium secondary battery may be smaller than that before the operation of the lithium secondary battery.

The silicon-containing compound of Formula 1 added into the electrolyte of the lithium secondary battery may form a solid electrolyte interphase (SEI) with low resistance due to improvement in stability and conductivity, so that the

lithium secondary battery may be improved in (high-temperature) lifetime characteristics and high-temperature stability.

When the lithium secondary battery includes a silicon-containing compound of Formula 1 above including a substituent selected from a halogen atom, and a C1-C6 alkyl group unsubstituted or substituted with a halogen atom, these substituents may serve as an electron-withdrawing group, so that carbons adjacent to these functional groups may be apt to be $\delta^+$ and easily react with the lithium salt $LiPF_6$ in the electrolyte. When the lithium secondary battery includes a silicon-containing compound of Formula 1 above including a C2-C12 alkenyl group unsubstituted or substituted with a halogen atom, this substituent may take electrons from anions of a non-aqueous organic solvent dissociated from melting of the lithium salt $LiPF_6$ in the electrolyte to form a single bond, which may consequently facilitate formation of a solid electrolyte interphase (SEI) layer on the surface of the anode.

The thin film formed on the surface of the anode may have a thickness of about 0.1 nm to about 100 nm, and in some embodiments, may have a thickness of about 0.1 nm to about 80 nm, and in some other embodiments, may have a thickness of about 0.5 nm to about 50 nm. When the thickness of the thin film is within these ranges, the thin film may not adversely affect transfer of lithium ions and may effectively prevent direct contact between the electrolyte and the anode.

FIG. 1 is a schematic cross-sectional view illustrating a thin film formed on a surface of an anode of a lithium secondary battery, according to an exemplary embodiment of the present invention. Referring to FIG. 1, when a silicon-containing compound of Formula 1 above is used as an additive of an electrolyte of a lithium secondary battery, a durable thin film 28 is formed on a surface of an anode 38 including an anode current collector 32 and an anode active material layer 30, enabling effective transfer of lithium ions 34 to the anode 38 via the electrolyte 26 as a medium.

FIG. 2 is an exploded perspective view of a lithium secondary battery 100 according to an embodiment of the present invention. Although the lithium secondary battery 100 of FIG. 2 is cylindrical, the present invention is not limited thereto, and lithium secondary batteries according to embodiments of the present invention may be of a rectangular type or a pouch type.

Lithium secondary batteries may be classified as lithium ion batteries, lithium ion polymer batteries, or lithium polymer batteries, according to the type of separator and/or electrolyte included therein. In addition, lithium batteries may be classified as cylindrical type, rectangular type, coin type, or pouch type, according to the shape thereof. Lithium batteries may also be classified as either bulk type or thin film type, according to the size thereof. Lithium secondary batteries according to embodiments of the present invention may have any of appropriate shapes. The structure of a lithium secondary battery and a method of manufacturing the same are widely known in the art, so a detailed description thereof will not be recited here.

Referring to FIG. 2, the lithium secondary battery 100 in cylindrical form includes an anode 112, a cathode 114, a separator 113 disposed between the anode 112 and the cathode 114, and an electrolyte (not shown) impregnated into the anode 112, the cathode 114, and the separator 113, a battery case 120, and a sealing member 140 sealing the battery case 120. The lithium secondary battery 100 is manufactured by sequentially stacking the anode 112, the cathode 114, and the separator 113 upon one another to form a stack, rolling the stack in a spiral form, and accommodating the rolled up stack in the battery case 120.

The anode 112 includes a current collector and an anode active material layer disposed on the current collector. The anode active material layer includes an anode active material.

The current collector of the anode may be copper (Cu), nickel (Ni), or stainless steel (SUS), depending on a voltage range. For example, the current collector of the anode may be a Cu current collector.

The anode active material is not specifically limited, and any anode active material commonly used in the art may be used. Examples of the anode active material include lithium metal, a metal that is alloyable with lithium, a transition metal oxide, a material that allows doping or undoping of lithium, a material that allows reversible intercalation and deintercalation of lithium ions, and the like.

Examples of the transition metal oxide include vanadium oxide, lithium vanadium oxide, and the like. Examples of the material that allows doping or undoping of lithium include silicon (Si), $SiO_x$ wherein $0<x<2$, an Si-Y alloy wherein Y is an alkali metal, an alkali earth metal, a Group XIII element, a Group XIV element, a transition metal, a rare earth element, or combinations thereof (except for Si), Sn, $SnO_2$, an Sn-Y alloy wherein Y is an alkali metal, an alkali earth metal, a Group XIII element, a Group XIV element, a transition metal, a rare earth element, or a combination thereof (except for Sn), and combinations of at least one of these materials and $SiO_2$. Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or combinations thereof.

The material that allows reversible intercalation and deintercalation of lithium ions may be any carbonaceous

anode active material that is commonly used in a lithium ion secondary battery. Examples of this material include crystalline carbon, amorphous carbon, and combinations thereof. Examples of the crystalline carbon are graphite, such as natural graphite or artificial graphite that are in amorphous, plate, flake, spherical or fibrous form. Examples of the amorphous carbon include soft carbon (carbon sintered at low temperatures), hard carbon, meso-phase pitch carbides, and sintered corks.

The anode active material layer may include a binder, and optionally, a conducting agent.

The binder strongly binds anode active material particles together to a current collector. Non-limiting examples of the binder are polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resin, and nylon.

The conducting agent is used to provide conductivity to the anode. Any electron conducting material that does not induce chemical change in batteries may be used. Examples of the conducting agent include natural graphite, artificial graphite, carbon black, acetylene black, ketjen black, carbon fibers, metal powder or metal fiber of copper (Cu), nickel (Ni), aluminum (Al), silver (Ag), and the like, conductive materials, such as a polyphenylene derivative, and combinations thereof. The current collector may be any one selected from among a copper foil, a nickel foil, a stainless steel foil, a titanium foil, a nickel foam, a copper form, a polymeric substrate coated with a conductive metal, and a combination thereof.

Amounts of the anode active material, the binder, and the conducting agent may be those levels normally used in lithium secondary batteries. For example, a weight ratio of the anode active material to a mixture of the conducting agent and the binder may be from about 98:2 to about 92:8. A mixing ratio of the conducting agent to the binder may be from about 1:1.5 to about 1:3, but is not limited thereto.

The cathode 114 includes a current collector and a cathode active material layer disposed on the current collector.

The current collector of the cathode 114 may be an aluminum (Al) current collector, but not limited thereto.

The cathode active material is not specifically limited, and may be any cathode active material commonly used in the art. For example, a compound that allows reversible intercalation and deintercalation of lithium may be used. At least one lithium composite oxide with a metal selected from cobalt, manganese, nickel, and a combination thereof may be used. For example, a compound represented by one of the following formulae may be used: $Li_aA_{1-b}B_bD_2$ (where $0.90 \le a \le 1.8$, and $0 \le b \le 0.5$); $Li_aE_{1-b}B_bO_{2-c}D_c$ (where $0.90 \le a \le 1.8$, $0 \le b \le 0.5$, and $0 \le c \le 0.05$); $LiE_{2-b}B_bO_{4-c}D_c$ (where $0 \le b \le 0.5$, and $0 \le c \le 0.05$); $Li_aNi_{1-b-c}CO_bB_cD_\alpha$ (where $0.90 \le a \le 1.8$, $0 \le b \le 0.5$, $0 \le c \le 0.05$, and $0 < \alpha \le 2$); $Li_aNi_{1-b-c}CO_bB_cO_{2-\alpha}F_\alpha$ (where $0.90 \le a \le 1.8$, $0 \le b \le 0.5$, $0 \le c \le 0.05$, and $0 < \alpha < 2$); $Li_aNi_{1-b-c}CO_bB_cO_{2-\alpha}F_2$ (where $0.90 \le a \le 1.8$, $0 \le b \le 0.5$, $0 \le c \le 0.05$, and $0 < \alpha < 2$); $Li_aNi_{1-b-c}Mn_bB_cD_\alpha$ (where $0.90 \le a \le 1.8$, $0 \le b \le 0.5$, $0 \le c \le 0.05$, and $0 < \alpha \le 2$); $Li_aNi_{1-b-c}Mn_bB_cO_{2-\alpha}F_\alpha$ (where $0.90 \le a \le 1.8$, $0 \le b \le 0.5$, $0 \le c \le 0.05$, and $0 < \alpha < 2$); $Li_aNi_{1-b-c}Mn_bB_cO_{2-\alpha}F_2$ (where $0.90 \le a \le 1.8$, $0 \le b \le 0.5$, $0 \le c \le 0.05$, and $0 < \alpha < 2$); $Li_aNi_bE_cG_dO_2$ (where $0.90 \le a \le 1.8$, $0 \le b \le 0.9$, $0 \le c \le 0.5$, and $0.001 \le d \le 0.1$); $Li_aNi_bCo_cMn_dGeO_2$ (where $0.90 \le a \le 1.8$, $0 \le b \le 0.9$, $0 \le c \le 0.5$, $0 \le d \le 0.5$, and $0.001 \le e \le 0.1$); $Li_aNiG_bO_2$ (where $0.90 \le a \le 1.8$, and $0.001 \le b \le 0.1$); $Li_aCoG_bO_2$ (where $0.90 \le a \le 1.8$, and $0.001 \le b \le 0.1$); $Li_aMnG_bO_2$ (where $0.90 \le a \le 1.8$, and $0.001 \le b \le 0.1$); $Li_aMn_2G_bO_4$ (where $0.90 \le a \le 1.8$, $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the formulae above, A is selected from the group consisting of nickel (Ni), cobalt (Co), manganese (Mn), and combinations thereof; B is selected from the group consisting of aluminum (Al), nickel (Ni), cobalt (Co), manganese (Mn), chromium (Cr), iron (Fe), magnesium (Mg), strontium (Sr), vanadium (V), a rare earth element, and combinations thereof; D is selected from the group consisting of oxygen (O), fluorine (F), sulfur (S), phosphorus (P), and combinations thereof; E is selected from the group consisting of cobalt (Co), manganese (Mn), and combinations thereof; F is selected from the group consisting of fluorine (F), sulfur (S), phosphorus (P), and combinations thereof; G is selected from the group consisting of aluminum (Al), chromium (Cr), manganese (Mn), iron (Fe), magnesium (Mg), lanthanum (La), cerium (Ce), strontium (Sr), vanadium (V), and combinations thereof; Q is selected from the group consisting of titanium (Ti), molybdenum (Mo), manganese (Mn), and combinations thereof; I is selected from the group consisting of chromium (Cr), vanadium (V), iron (Fe), scandium (Sc), yttrium (Y), and combinations thereof; and J is selected from the group consisting of vanadium (V), chromium (Cr), manganese (Mn), cobalt (Co), nickel (Ni), copper (Cu), and combinations thereof.

Examples of the cathode active materials are $LiCoO_2$, $LiNi_{1-X}Co_XO_2$($0 \le x < 1$), $Li_{1-X}M_XO_2$ (M is Mn or Fe, $0.03 < x < 0.1$), $Li[Ni_xCo_{1-2X}Mn_X]O_2$ ($0 < x < 0.5$), $Li[Ni_XMn_x]O_2$ ($0 < x \le 0.5$), $Li_{1+x}(M)_{1-y}O_z$ ($0 < x \le 1$, $0 \le y < 1$, $2 \le z \le 4$, and M is a transition metal), $LiM_2O_4$ (M is Ti, V, or Mn), $LiM_XMn_{2-X}O_4$ (M is a transition metal), $LiFePO_4$, $LiMPO_4$ (M is Mn, Co, or Ni). $V_2O_5$, $V_2O_3$, $VO_2$(B), $V_6O_{13}$, $V_4O_9$, $V_3O_7$, $Ag_2V_4O_{11}$, $AgVO_3$, $LiV_3O_5$, $\delta$-$Mn_yV_2O_5$, $\delta$-$NH_4V_4O_{10}$, $Mn_{0.8}V_7O_{16}$, $LiV_3O_8$, $Cu_xV_2O_5$, $Cr_xV_6O_{13}$, $M_2(XO_4)_3$ (M is a transition metal, and X is S, P, As, Mo, or W), or $Li_3M_2(PO_4)_3$ (M is Fe, V, or Ti).

For example, the cathode active material may include $Li_{1+x}M_{1-y}O_z$ (where M is at least one of Ni, Co, Mn, and Al, $0 \le x \le 1$, $0 \le y \le 1$, and $2 \le z \le 4$).

The compounds listed above as cathode active materials may have a coating layer on a surface thereof. Alternatively, a mixture of a compound without having a coating layer and a compound having a coating layer, the compounds being selected from the compounds listed above, may be used. The coating layer may include at least one compound of a coating element selected from the group consisting of oxide, hydroxide, oxyhydroxide, oxycarbonate, and hydroxycarbonate of the coating element. The compounds for the coating layer may be amorphous or crystalline. The coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or mixtures thereof. The coating layer may be formed using any method that does not adversely affect the physical properties of the cathode active material when a compound of the coating element is used. For example, the coating layer may be formed using a spray coating method, a dipping method, or the like. This is obvious to those of skill in the art, and thus a detailed description thereof will be omitted.

The cathode active material layer may include a binder and a conducting agent.

The cathode active material may have an operation voltage of about 4.0V to aout 5.5V. In some embodiments, the cathode active material having an operation voltage within this range may be an over-lithiated oxide (OLO)-based cathode active material, a 5V-cathode active material having a spinel structure.

The binder strongly binds cathode active material particles together and to a current collector. Non-limiting examples of the binder are polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resin, and nylon.

The conducting agent is used for providing conductivity to the cathode. Any electron conducting material that does not induce chemical change in batteries may be used. Examples of the conducting agent are natural graphite, artificial graphite, carbon black, acetylene black, ketjen black, carbon fibers, metal powder or metal fiber of copper (Cu), nickel (Ni), aluminum (Al), silver (Ag), and conductive materials, such as polyphenylene derivatives, which may be used along or in a combination of at least two thereof.

Amounts of the cathode active material, the binder, and the conducting agent may be those levels normally used in lithium batteries. For example, a weight ratio of the cathode active material to a mixture of the conducting agent and the binder may be from about 98:2 to about 92:8. A mixing ratio of the conducting agent to the binder may be from about 1:1.5 to about 1:3, but is not limited thereto.

The anode 112 and the cathode 114 may each be manufactured by mixing an active material, a binder, and a conducting agent in a solvent to prepare an active material composition, and coating the active material composition on a current collector. The method of manufacturing such electrodes is obvious to one of ordinary skill in the art, and thus a detailed description thereof will not be provided. N-methylpyrrolidione may be used as the solvent, but embodiments of the present invention are not limited thereto.

A separator may be present between the cathode and the anode depending on the type of the lithium battery. The separator may be a monolayer or a multilayer including at least two layers of polyethylene, polypropylene, polyvinylidene fluoride, or a combination thereof. The multilayer may be a mixed multilayer. For example, the separator may be a two-layered separator including polyethylene and polypropylene layers, a three-layered separator including polyethylene, polypropylene and polyethylene layers, or a three-layered separator including polypropylene, polyethylene and polypropylene layers.

One or more embodiments of the present invention will now be described in detail with reference to the following examples. However, these examples are not intended to limit the scope of the one or more embodiments of the present invention. Technical descriptions that are obvious to one of ordinary skill in the art will be omitted herein.

[Examples]

(Preparation of electrolyte for lithium secondary battery

**Example 1: Electrolyte for lithium secondary battery**

About 1.0wt% of Compound 1 below was added into a mixed organic solvent of about 20.0 volume% of ethylene carbonate, about 40.0 volume% of ethyl methyl carbonate and about 40.0 volume% of dimethyl carbonate, followed by adding 1.15 M $LiPF_6$ as a lithium salt to prepare an electrolyte for a lithium secondary battery.

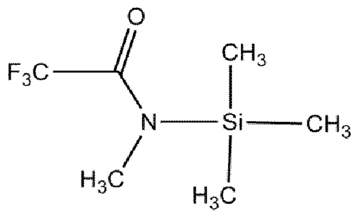

1

## Example 2: Electrolyte for lithium secondary battery

An electrolyte for a lithium secondary battery was prepared in the same manner as in Example 1, except that about 2.0wt% of Compound 1 above, instead of about 1.0wt% of Compound 1, was used as an additive.

## Example 3: Electrolyte for lithium secondary battery

An electrolyte for a lithium secondary battery was prepared in the same manner as in Example 1, except that about 2.0wt% of Compound 2 below, instead of about 1.0wt% of Compound 1 above, was used as an additive.

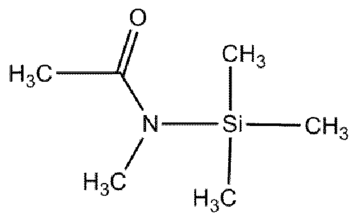

2

## Example 4: Electrolyte for lithium secondary battery

An electrolyte for a lithium secondary battery was prepared in the same manner as in Example 1, except that about 2.0wt% of Compound 3 below, instead of about 1.0wt% of Compound 1 above, was used as an additive.

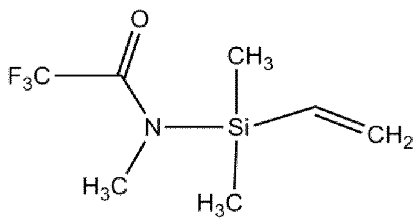

3

## Example 5: Electrolyte for lithium secondary battery

An electrolyte for a lithium secondary battery was prepared in the same manner as in Example 1, except that about 2.0wt% of Compound 4 below, instead of about 1.0wt% of Compound 1 above, was used as an additive.

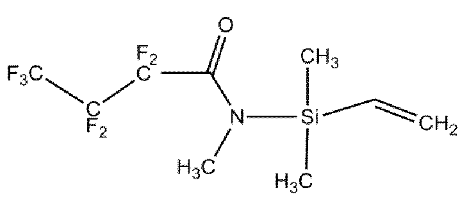

4

**Example 6: Electrolyte for lithium secondary battery**

About 1.0wt% of Compound 1 above was added into a mixed organic solvent of about 10.0 volume% of ethylene carbonate, about 40.0 volume% of ethyl methyl carbonate, about 40.0 volume% of dimethyl carbonate, and about 10.0 volume% of fluoroethylene carbonate, followed by adding 1.15 M $LiPF_6$ as a lithium salt to prepare an electrolyte for a lithium secondary battery.

**Example 7: Electrolyte for lithium secondary battery**

About 1.0wt% of Compound 1 above and about 1.0wt% of $LiPO_2F_2$ were added into a mixed organic solvent of about 20.0 volume% of ethylene carbonate, about 40.0 volume% of ethyl methyl carbonate and about 40.0 volume% of dimethyl carbonate, followed by adding 1.15 M $LiPF_6$ as a lithium salt to prepare an electrolyte for a lithium secondary battery.

**Comparative Example 1: Electrolyte for lithium secondary battery**

An electrolyte for a lithium secondary battery was prepared using a mixed organic solvent of about 20.0 volume% of ethylene carbonate, about 40.0 volume% of ethyl methyl carbonate and about 40.0 volume% of dimethyl carbonate, and 1.15 M $LiPF_6$ as a lithium salt.

**Comparative Example 2: Electrolyte for lithium secondary battery**

An electrolyte for a lithium secondary battery was prepared using a mixed organic solvent of about 10.0 volume% of ethylene carbonate, about 40.0 volume% of ethyl methyl carbonate, about 40.0 volume% of dimethyl carbonate, and 10.0 volumes% of fluoroethylene carbonate, and 1.15 M $LiPF_6$ as a lithium salt.

**Comparative Example 3: Electrolyte for lithium secondary battery**

About 1.0wt% of $LiPO_2F_2$ and about 0.5wt% of vinylene carbonate were added into a mixed organic solvent of about 20.0 volume% of ethylene carbonate, about 40.0 volume% of ethyl methyl carbonate and about 40.0 volume% of dimethyl carbonate, followed by adding 1.15 M $LiPF_6$ as a lithium salt to prepare an electrolyte for a lithium secondary battery.

**Comparative Example 4: Electrolyte for lithium secondary battery**

About 1.0wt% of Compound 5 (N,O-bis(trimethylsilyl)trifluoroacetamide) below was added into a mixed organic solvent of about 20.0 volume% of ethylene carbonate, about 40.0 volume% of ethyl methyl carbonate and about 40.0 volume% of dimethyl carbonate, followed by adding 1.15 M $LiPF_6$ as a lithium salt to prepare an electrolyte for a lithium secondary battery.

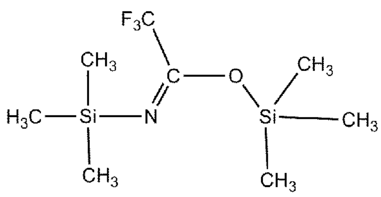

5

(Manufacture of lithium secondary battery)

**Example 8: Lithium secondary battery**

$LiNi_{0.6}Mn_{0.2}Co_{0.2}O_2$ powder as a cathode active material, 5 wt% of polyvinylidene fluoride (PVdF) as a binder dissolved in N-methylpyrrolidone (NMP), and a conducting agent (Denka black) were mixed in a weight ratio of 97:3:3 in an agate mortar to prepare a slurry. The slurry was bar-coated on an aluminum foil having a thickness of about 15 $\mu$m. The aluminum foil coated with the slurry was dried in a 90 °C vacuum oven for about 2 hours to evaporate NMP (first drying), and then in a 120°C vacuum oven for about 2 hours (second drying) until the NMP was completely evaporated. After being roll-pressed, the electrode plate was cut into a cathode of 54 mm x 250mm with an uncoated part having a width of about 10 mm, and an anode of 58 mm x 280mm. The anode with two separators on upper and lower surfaces of the anode was wound in a cylindrical form, followed by welding a cathode tap and an anode tap to the structure, which was then place in a cylindrical can and sealed, thereby manufacturing a half battery. The electrolyte of Example 1 was injected into the cylindrical can, followed by can clipping to manufacture a 18650 mini cell. The separators were prepared by coating surfaces of a polyethylene substrate (available from Asahi Co.) with $\alpha$-$Al_2O_3$ powder having an average particle diameter of about 50 nm.

**Examples 9-14: Lithium secondary batteries**

18650 minicells were manufactured in the same manner as in Example 8, except that the electrolytes of Examples 2 to 7 were used, respectively.

**Comparative Examples 5-8: Manufacture of lithium secondary batteries**

18650 minicells were manufactured in the same manner as in Example 9, except that the electrolytes of Comparative Examples 1 to 4 were used, respectively.

(Battery performance test)

**Evaluation Example 1: Evaluation of lifetime characteristics**

Evaluation Example 1-1: Evaluation of room-temperature lifetime characteristics

Formation charging/discharging was performed twice on the lithium secondary batteries of Examples 8, 12, and 14 and Comparative Examples 7 and 8 at room temperature. In the formation process, each of the lithium secondary batteries was charged at a constant current of about 0.2C to a voltage of 4.2V (with respect to Li), followed by charging at a constant voltage of 4.2V to a 0.05C current, and discharging at a constant current of 0.2C to a voltage of 2.8V (with respect to Li). After the formation charging and discharging, each of the lithium secondary batteries was charged at 0.5C in the same manner as above and then discharged at 0.2C to a voltage of 2.8 V (with respect to Li). This charging and discharging condition was termed as "standard charging and discharging condition", and the discharge capacity in this condition was defined as a "standard capacity".

Subsequently, each of the lithium secondary batteries of Examples 8, 12, and 14 and Comparative Examples 7 and 8 were charged at a constant current of 1.5C at about 25°C to a voltage of 4.2V (with respect to Li), followed by discharging at a constant current of about 1.5C to a voltage of about 2.8V (with respect to Li). This cycle of charging and discharging was repeated 300 times. Discharge capacities of the lithium secondary batteries at each cycle and $300^{th}$ cycle were measured, and a discharge capacity retention (%) of each lithium secondary battery was calculated using Equation 1 below. The results are shown in FIG. 3 and Table 1 below.

<Equation 1>

$$\text{Discharge capacity retention [\%]} = [\text{Discharge capacity at } 300^{th} \text{ cycle/Discharge capacity at } 1^{st} \text{ cycle}] \times 100$$

[Table 1]

| Example | Discharge capacity at $1^{st}$ cycle (mAh) | Discharge capacity at $300^{th}$ cycle (mAh) | Discharge capacity retention (%) |
|---|---|---|---|
| Example 8 | 177.9 | 166.8 | 93.8 |
| Example 12 | 162.0 | 153.1 | 94.5 |
| Example 14 | 177.5 | 167.6 | 94.4 |
| Comparative Example 7 | 179.3 | 166.0 | 92.6 |

(continued)

| Example | Discharge capacity at 1st cycle (mAh) | Discharge capacity at 300th cycle (mAh) | Discharge capacity retention (%) |
|---|---|---|---|
| Comparative Example 8 | 162.3 | 146.0 | 90.0 |

Referring to FIG. 5 and Table 1, the lithium secondary batteries of Examples 8, 12, and 14 were found to have better high-rate characteristics than the lithium secondary batteries of Comparative Examples 7 and 8.

Evaluation Example 1-2: Evaluation of high-temperature lifetime characteristics

After formation charging and discharging of the lithium secondary batteries of Examples 8, 13 and 14 and Comparative Example 7 in the same manner as in Evaluation Example 1-1, each of the lithium secondary batteries was charged at a constant current of 1.5C in a constant-temperature chamber at 45°C to a voltage of 4.25V (with respect to Li), followed by discharging at a constant current of about 1.5C to a voltage of about 2.8V (with respect to Li). This cycle of charging and discharging was repeated 300 times. Discharge capacities of the lithium secondary batteries at each cycle and 300$^{th}$ cycle were measured, and a discharge capacity retention (%) of each lithium secondary battery was calculated using Equation 1 in Evaluation Example 1-1. The results are shown in FIG. 4 and Table 2 below.

[Table 2]

| Example | Discharge capacity at 1st cycle (mAh) | Discharge capacity at 300th cycle (mAh) | Discharge capacity retention (%) |
|---|---|---|---|
| Example 8 | 192.95 | 172.9 | 89.6 |
| Example 13 | 178.1 | 167.8 | 94.2 |
| Example 14 | 193.2 | 177.2 | 91.7 |
| Comparative Example 7 | 193.6 | 171.7 | 88.7 |

Referring to FIG. 4 and Table 2, the lithium secondary batteries of Examples 8, 13, and 14 were found to have improved discharge capacity retentions, compared to the lithium secondary battery of Comparative Example 7.

**Evaluation Example 2: Evaluation of resistance increase rate after storage**

High-temperature storage capacities of the lithium secondary batteries of Examples 8 and 14 and Comparative Example 7 were tested after storage at about 60°C. The results are shown in FIG. 5

The high-temperature storage capacities were evaluated as follows.

The lithium secondary batteries of Examples 8 and 14 and Comparative Example 7 were charged at room temperature (25□) at about 0.5C to about 4.2V (cut-off current; 10mA), rest for about 30 minutes, and left in a 60°C oven for 0 day, 10 days, and 30 days. Each of the lithium second batteries was removed from the oven on the 0$^{th}$ day, 10$^{th}$ day, and 30$^{th}$ day, and discharged at about 0.5C three times. The discharge capacity from the last measurement was read as the remaining capacity of the lithium secondary battery.

Referring to FIG. 5, a reduced discharge capacity of the lithium secondary batteries of Examples 8 and 14 were found to be less, compared to a reduced discharge capacity of the lithium secondary battery of Comparative Example 7 at about 60°C. This indicates that the lithium secondary batteries of Examples 8 and 14 were found to have better stability at about 60°C than the lithium secondary batteries of Comparative Examples 6 to 10.

**Evaluation Example 3: Cyclic voltammetry test**

Cyclic voltammetry analysis was performed on the electrolytes of Example 2 and Comparative Example 1, as follows.

A graphite electrode as a working electrode, lithium metal as a counter electrode, and lithium metal as a reference electrode were prepared. The cyclic voltammetry was performed on the electrolytes of Example 2 and Comparative Example 1 in a voltage range of from about 0V to about 3.0V (vs. normal hydrogen electrode (NHE) at a scan

rate of about 1 mV/s using a potentiostat/galvanostat and the triodes to measure current densities. The results are shown in FIG. 6

Referring to FIG. 6, unlike the electrolyte of Comparative Example 1, the electrolyte of Example 2 was found to exhibit a peak of lithium intercalation into graphite, and an irreversible peak from the surface of the graphite electrode after one cycle, indicating that the additive in the electrolyte of Example 2 forms a thin film on the graphite electrode.

**Evaluation Example 4: Linear sweep voltammetry (LSV) test**

Linear sweep voltammetry (LSV) analysis was performed on the electrolytes of Example 2 and Comparative Example 1 to evaluate electrolytic behavior. The results are shown in FIG. 7.

Platinum (Pt) electrodes as a working electrode and a counter electrode, and lithium metal as a reference electrode were prepared for LSV analysis. The LSV analysis was performed on the electrolytes of Example 2 and Comparative Example 1 in a voltage range of from about 3.0V to about 7.0V (vs. normal hydrogen electrode (NHE) at a scan rate of about 1 mV/s using a potentiostat/galvanostat and the triodes to measure current densities. The results are shown in FIG. 7.

Referring to FIG. 7, the electrolyte of Example 2 was found to exhibit a minute current at a lower potential than the electrolyte of Comparative Example 1. This indicates that the electrolyte of Example 2 has a higher oxidation potential than the electrolyte of Comparative Example 1, and thus is stable against oxidation.

**Evaluation Example 5: Impedance measurement**

Impedances of the lithium secondary batteries of Example 9 and Comparative Example 5 were measured to represent resistances. The results are shown in FIG. 8.

The impedance measurement was performed as follows.

After formation charging and discharging of the lithium secondary batteries of Example 9 and Comparative Example 5 in the same manner as in Evaluation Example 1-1, the lithium secondary batteries were charged at 25°C at a constant current of 1.5C to a voltage of 4.2V (with respect to Li), followed by discharging at a constant current of about 1.5C to a voltage of about 2.8V (with respect to Li). After repeating this cycle of charging and discharging five times, each of the lithium secondary batteries was charged at about 25°C at a current of about 100mA and a voltage of about 4.2V to a cut-off current of about 10mA, followed by impedance measurement at a small excitation amplitude of about 5 mV to about 10mV and a frequency of about 10mHz to about 10kHz.

After repeating the cycle of charging and discharging 50 times, impedances of the lithium secondary batteries of Example 9 and Comparative Example 5 were measured in the same conditions as above.

In FIG. 8, Re(Z) on the horizontal axis represents a real impedance, and Im(Z) on the vertical axis represents an imaginary impedance.

Referring to FIG. 8, size of a half circle in the impedance spectra of the lithium secondary batteries of Example 9 was smaller after both 5 cycles and 50 cycles, compared to that of the lithium secondary batter of Comparative Example 5. This indicates that a thin film formed in the lithium secondary battery of Example 9 at an early stage of charging and discharging has a lower resistance than that in the lithium secondary battery of Comparative Example 5, significantly suppressing increase in resistance with repeated charging and discharging.

This is attributed to that the thin film of the lithium secondary battery of Example 9 remains stable with repeated charging and discharging.

While the present invention has been particularly shown and described with reference to embodiments thereof, it will be understood by those of ordinary skill in the art that various changes in form and details may be made therein without departing from scope of the present invention as defined by the following claims.

**Claims**

1. Use of one or more silicon-containing compounds represented by Formula 1 or one or more compounds selected from the group consisting of Compounds 3 and 4 or a salt or solvate thereof, in an electrolyte:

<Formula 1>

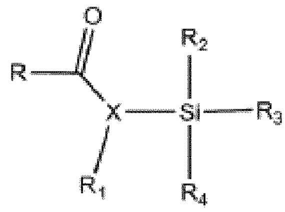

wherein, in Formula 1,

X is nitrogen (N);
R is a C1-C6 alkyl group substituted with one or more halogen atoms;
$R_1$ is an unsubstituted C1-C6 alkyl group or a C1-C6 alkyl group substituted with one or more halogen atoms;
$R_2$ is an unsubstituted C2-C5 alkenyl group; and
$R_3$, and $R_4$ are each independently an unsubstituted C2-C5 alkyl group;

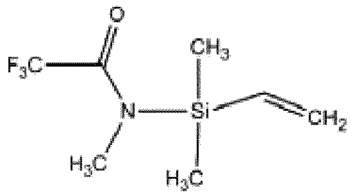

3

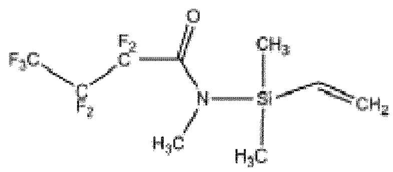

4

.

2. A compound of Formula 1 or Compound 3 or Compound 4 according to Claim 1.

3. An electrolyte for lithium secondary batteries comprising the silicon-containing compound as defined in Claims 1 to 2.

4. The electrolyte of Claim 3, wherein the amount of the silicon-containing compound is from 0.01wt% to 25wt% based on a total weight of the electrolyte.

5. The electrolyte of Claim 3 or Claim 4, wherein the electrolyte further comprises lithium difluorophosphate ($LiPO_2F_2$).

6. The electrolyte of Claim 5, wherein the amount of the lithium difluorophosphate ($LiPO_2F_2$) is from 0.01wt% to 5wt% based on a total weight of the electrolyte.

7. A lithium secondary battery comprising the silicon-containing compound as defined in Claims 1 to 2 or comprising the electrolyte of Claims 3 to 6.

8. The lithium secondary battery of Claim 7, wherein a surface of an anode of the battery comprises a solid electrolyte interphase film that comprises a reaction product of the compound of Formula 1 according to Claims 1 to 2.

9. The lithium secondary battery of Claims 7 and 8, wherein the solid electrolyte interphase film has a thickness of 0.1 nm to 100 nm.

**Patentansprüche**

1. Verwendung einer oder mehrerer siliciumhaltigen Verbindungen, die durch die Formel 1 dargestellt sind, oder einer oder mehrerer Verbindungen, ausgewählt aus der Gruppe bestehend aus den Verbindungen 3 und 4 oder einem Solvat davon, in einem Elektrolyten:

< Formel 1 >

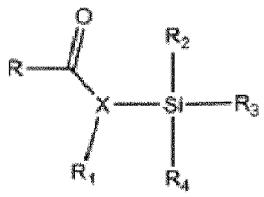

wobei, in der Formel 1

X Stickstoff (N) ist;
R eine C1-C6-Alkylgruppe ist, die mit einem oder mehr Halogenatomen substituiert ist;
$R_1$ eine unsubstituierte C1-C6-Alkylgruppe oder eine C1-C6-Alkylgruppe ist, die mit einem oder mehreren Halogenatomen substituiert ist;
$R_2$ eine unsubstituierte C2-C5-Alkenylgruppe ist, und
$R_3$ und $R_4$ jeweils unabhängig eine unsubstituierte C2-C5-Alkylgruppe sind;

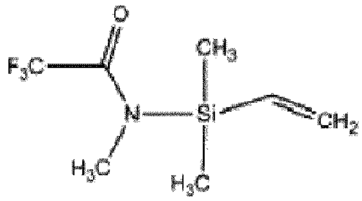

3

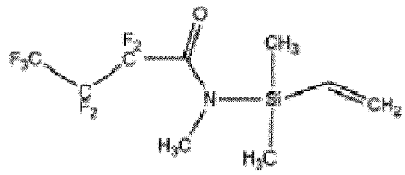

4

.

2. Verbindung der Formel 1 oder Verbindung 3 oder Verbindung 4 nach Anspruch 1.

3. Elektrolyt für Lithiumsekundärbatterien umfassend eine siliciumhaltige Verbindung wie in den Ansprüchen 1 bis 2 definiert.

4. Elektrolyt nach Anspruch 3, wobei die Menge der siliciumhaltigen Verbindung 0,01 Gew.-% bis 25 Gew.-%, auf ein Gesamtgewicht des Elektrolyts bezogen, beträgt.

5. Elektrolyt nach Anspruch 3 oder Anspruch 4, wobei der Elektrolyt ferner Lithiumdifluorphosphat ($LiPO_2F_2$) umfasst.

6. Elektrolyt nach Anspruch 5, wobei die Menge des Lithiumdifluorphosphats ($LiPO_2F_2$) 0,01 Gew.-% bis 5 Gew.-%, auf ein Gesamtgewicht des Elektrolyts bezogen, beträgt.

7. Lithiumsekundärbatterie umfassend die siliciumhaltige Verbindung wie in den Ansprüchen 1 bis 2 definiert oder den Elektrolyten der Ansprüche 3 bis 6 umfassend.

8. Lithiumsekundärbatterie nach Anspruch 7, wobei eine Oberfläche einer Anode der Batterie einen festen Elektrolytzwischenphasefilm umfasst, der ein Reaktionsprodukt der Verbindung der Formel 1 den Ansprüchen 1 bis 2 entsprechend umfasst.

9. Lithiumsekundärbatterie nach den Ansprüchen 7 und 8, wobei der feste Elektrolytzwischenphasefilm eine Dicke von 0,1 nm bis 100 nm aufweist.

## Revendications

1. Utilisation d'un ou plusieurs composés contenant du silicium représentés par la Formule 1 ou d'un ou plusieurs composés sélectionnés dans le groupe constitué des composés 3 et 4 ou d'un sel ou d'un solvate de ceux-ci, dans un électrolyte:

<Formule 1>

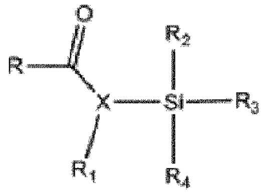

dans lesquels, dans la Formule 1,

X est un atome d'azote (N);
R est un groupe alkyle en $C_1$ à $C_6$ substitué par un ou plusieurs atomes d'halogène;
$R_1$ est un groupe alkyle en $C_1$ à $C_6$ non substitué ou un groupe alkyle en $C_1$ à $C_6$ substitué par un ou plusieurs atomes d'halogène;
$R_2$ est un groupe alcényle en $C_2$ à $C_5$ non substitué; et
$R_3$, et $R_4$ sont chacun indépendamment un groupe alkyle en $C_2$ à $C_5$ non substitué;

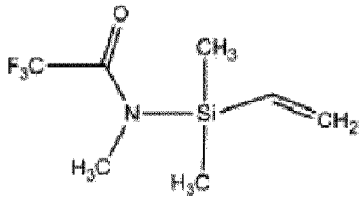

3

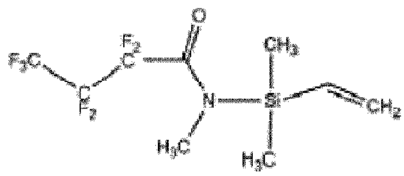

4

.

**2.** Composé de Formule 1 ou composé 3 ou composé 4 selon la revendication 1.

**3.** Électrolyte pour batteries secondaires à ions lithium comprenant le composé contenant du silicium tel que défini selon les revendications 1 à 2.

**4.** Électrolyte selon la revendication 3, la quantité du composé contenant du silicium étant de 0,01 % en pds à 25 % en pds sur la base d'un poids total de l'électrolyte.

**5.** Électrolyte selon la revendication 3 ou la revendication 4, l'électrolyte comprenant en outre du difluorophosphate de lithium ($LiPO_2F_2$).

**6.** Électrolyte selon la revendication 5, la quantité du difluorophosphate de lithium ($LiPO_2F_2$) étant de 0,01 % en pds à 5 % en pds sur la base d'un poids total de l'électrolyte.

**7.** Batterie secondaire à ions lithium comprenant le composé contenant du silicium tel que défini selon les revendications 1 à 2 ou comprenant l'électrolyte selon les revendications 3 à 6.

**8.** Batterie secondaire à ions lithium selon la revendication 7, une surface d'une anode de la batterie comprenant un film d'interphase électrolytique solide qui comprend un produit réactionnel du composé de Formule 1 selon les revendications 1 à 2.

**9.** Batterie secondaire à ions lithium selon les revendications 7 et 8, le film d'interphase électrolytique solide ayant une épaisseur de 0,1 nm à 100 nm.

FIG. 1

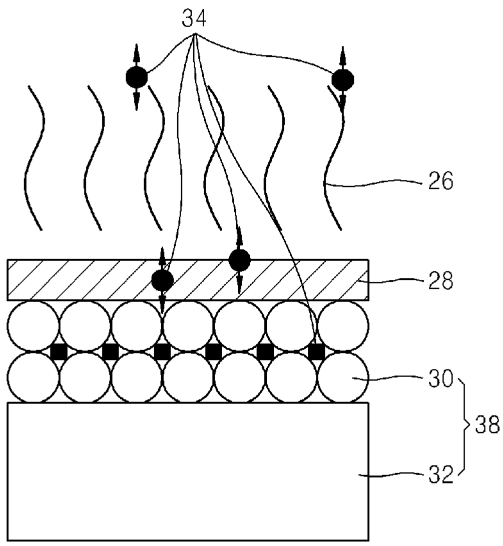

FIG. 2

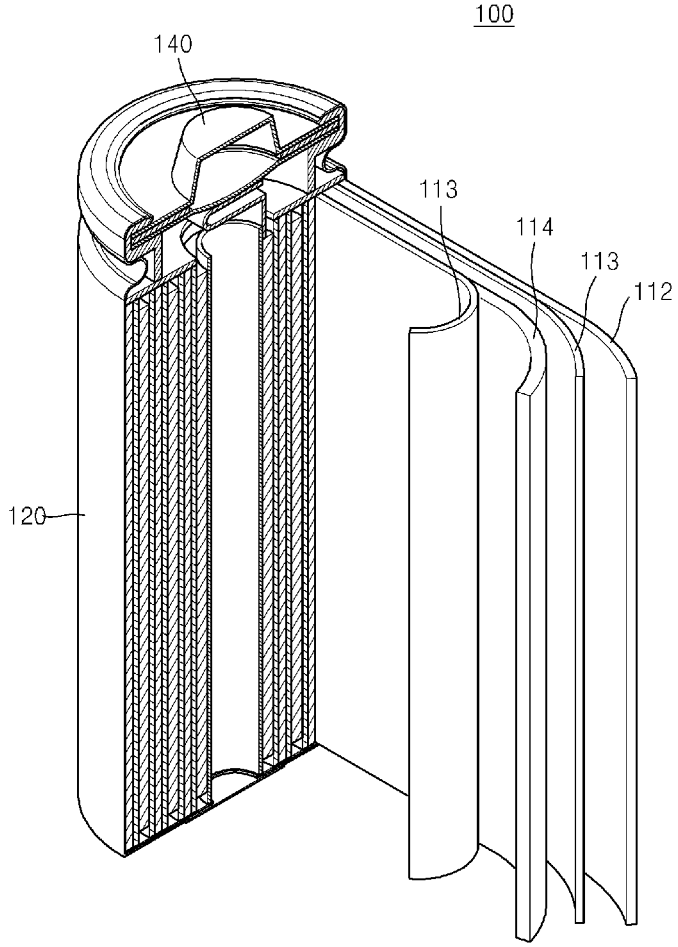

FIG. 3

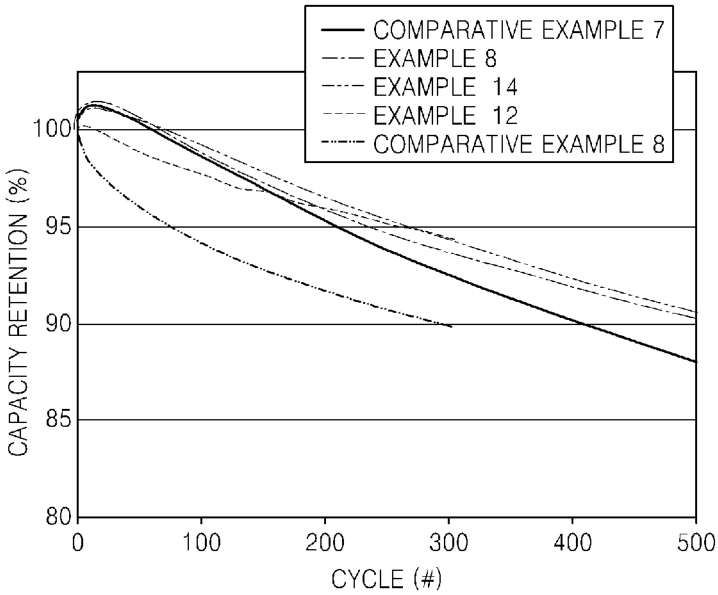
COMPARATIVE EXAMPLE 7
EXAMPLE 8
EXAMPLE 14
EXAMPLE 12
COMPARATIVE EXAMPLE 8
CAPACITY RETENTION (%)
100
95
90
85
80
0
100
200
300
400
500
CYCLE (#)

FIG. 4

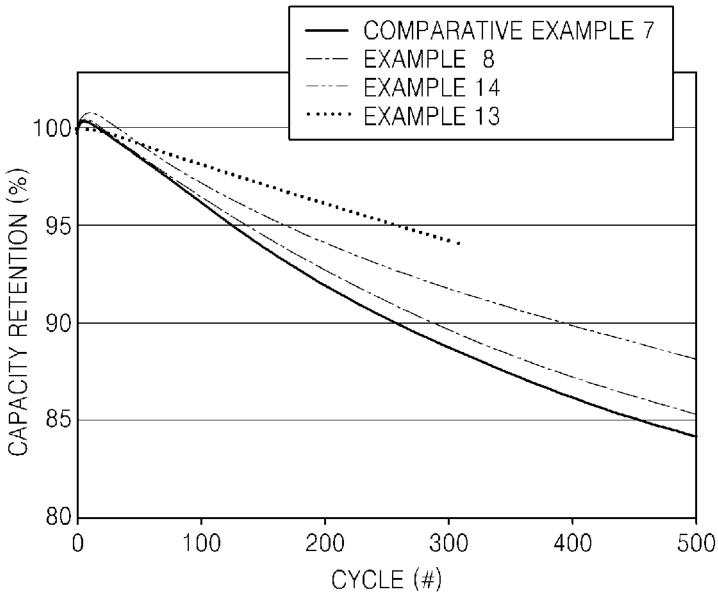
COMPARATIVE EXAMPLE 7
EXAMPLE 8
EXAMPLE 14
EXAMPLE 13
CAPACITY RETENTION (%)
100
95
90
85
80
0
100
200
300
400
500
CYCLE (#)

FIG. 5

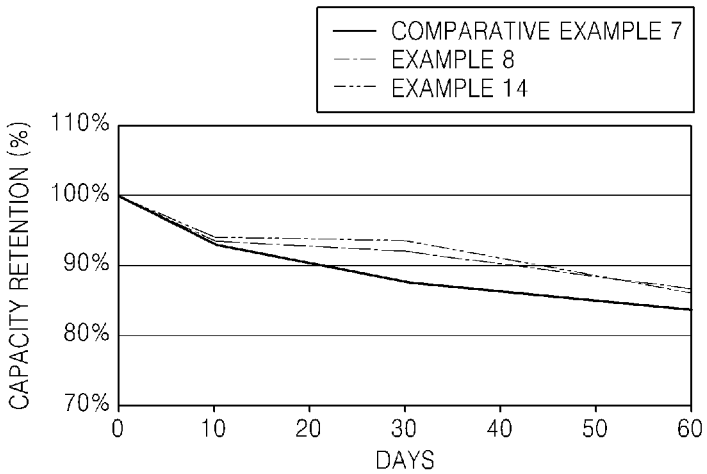
COMPARATIVE EXAMPLE 7
EXAMPLE 8
EXAMPLE 14
CAPACITY RETENTION (%)
110%
100%
90%
80%
70%
0
10
20
30
40
50
60
DAYS

FIG. 6

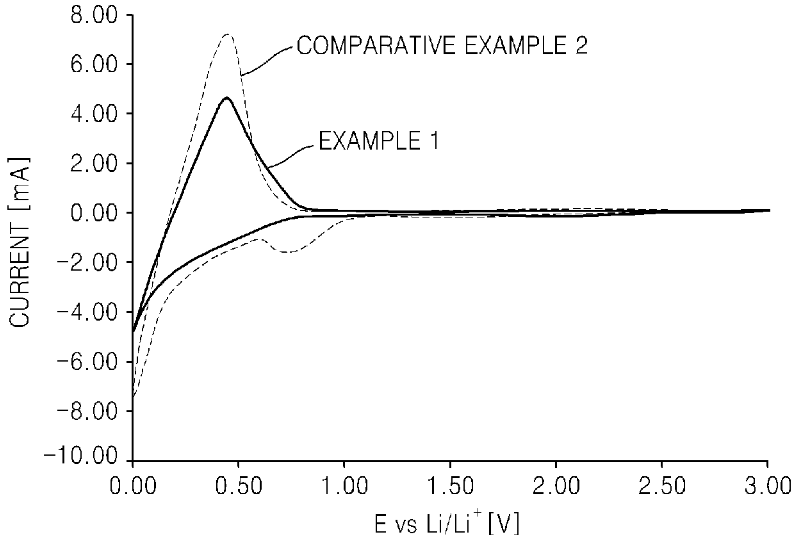
COMPARATIVE EXAMPLE 2
EXAMPLE 1
CURRENT [mA]
8.00
6.00
4.00
2.00
0.00
−2.00
−4.00
−6.00
−8.00
−10.00
0.00
0.50
1.00
1.50
2.00
2.50
3.00
E vs Li/Li+ [V]

FIG. 7

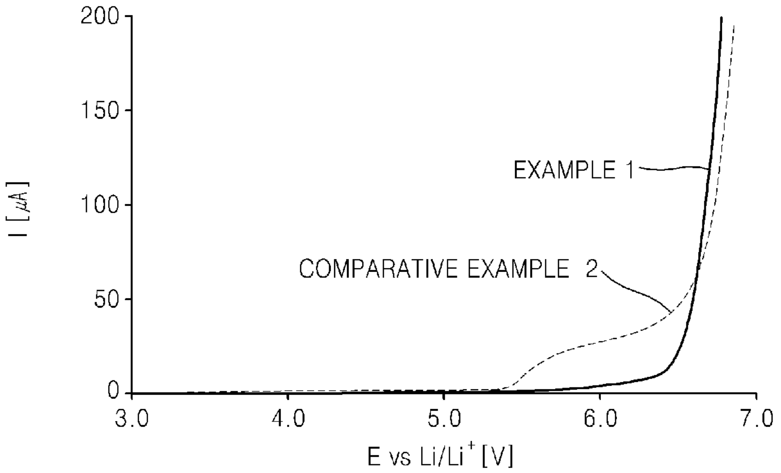
200
150
100
50
0
I [μA]
EXAMPLE 1
COMPARATIVE EXAMPLE 2
3.0
4.0
5.0
6.0
7.0
E vs Li/Li+ [V]

FIG. 8

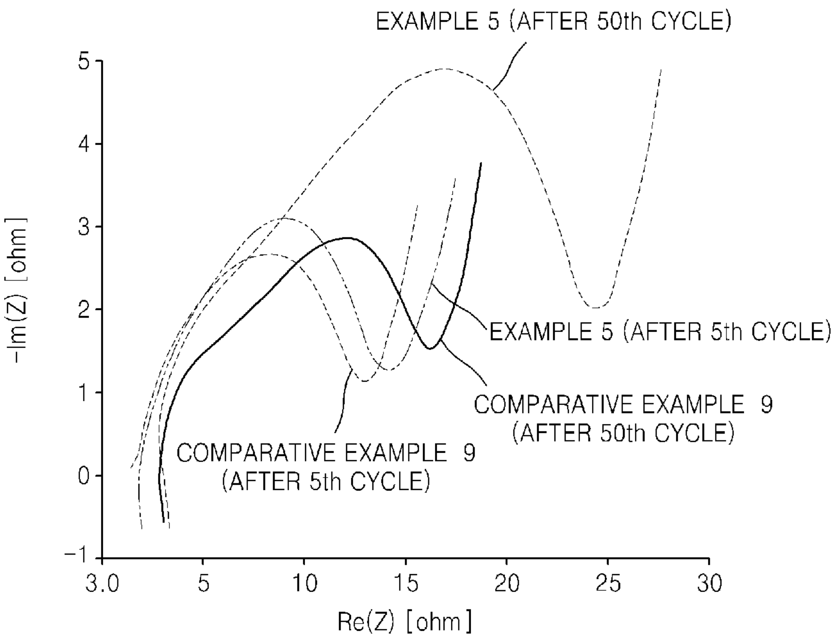
EXAMPLE 5 (AFTER 50th CYCLE)
5
4
3
2
1
0
−1
−Im(Z) [ohm]
EXAMPLE 5 (AFTER 5th CYCLE)
COMPARATIVE EXAMPLE 9
(AFTER 50th CYCLE)
COMPARATIVE EXAMPLE 9
(AFTER 5th CYCLE)
3.0
5
10
15
20
25
30
Re(Z) [ohm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006269846 A1
- US 2013011728 A1